# EUROPÄISCHE PATENTSCHRIFT

(11) **EP 3 027 541 B1**
(45) Veröffentlichungstag und Bekanntmachung des Hinweises auf die Patenterteilung: **04.11.2020**
(21) Anmeldenummer: 14736615.7
(22) Anmeldetag: 24.06.2014
(51) Int. Cl.: B65G 39/12

(54) **EINSTELLBARER TRAGROLLENSTUHL IN EINER FÃ-RDERBANDANLAGE UND EINSTELLBARE ANORDNUNG HIERZU**
ADJUSTABLE CARRYING-ROLLER BRACKET IN A CONVEYING-BELT INSTALLATION, AND ADJUSTABLE ARRANGEMENT FOR THIS PURPOSE
SIÈGE DE ROULEAUX PORTEURS RÉGLABLE DANS UN SYSTÈME À BANDE TRANSPORTEUSE ET AGENCEMENT RÉGLABLE DESTINÉ À CELUI-CI

(30) Priorität: 01.08.2013 DE 102013108301
(43) Veröffentlichungstag der Anmeldung: 08.06.2016
(73) Patentinhaber: thyssenkrupp Industrial Solutions AG, 45143 Essen (DE)
(72) Erfinder: PELTZER, Georg, 41515 Grevenbroich (DE); MENDL, Thomas, 40789 Monheim (DE); REINZ, Monika, 45731 Waltrop (DE)
(74) Vertreter: thyssenkrupp Intellectual Property GmbH
(86) Internationale Anmeldenummer: PCT/EP2014/001713
(87) Internationale Veröffentlichungsnummer: WO 2015/014425

(56) Entgegenhaltungen:
- EP-A1- 0 850 861
- WO-A1-2013/082642
- DE-B- 1 268 540
- DE-U- 1 740 375
- FR-A1- 2 363 499
- GB-A- 1 033 031
- GB-A- 2 163 121
- JP-A- S5 826 708
- US-A- 2 653 700
- US-A1- 2008 073 182
- US-B1- 7 287 642

## Beschreibung

Die vorliegende Erfindung betrifft eine Förderbandanlage mit einem einstellbaren Tragrollenstuhl, wobei der Tragrollenstuhl einen Querträger aufweist, an dem innere Tragrollen und äußere Tragrollen aufgenommen sind, die zur Abstützung und zur Führung eines in einer Führungsrichtung überlaufenden Förderbandes ausgebildet sind, weiterhin aufweisend zwei Verbindungselemente, durch die der Tragrollenstuhl an sich gegenüberliegenden Seiten in der Förderbandanlage anordbar ist.

### STAND DER TECHNIK

Die GB 2 163 121 A zeigt einen einstellbaren Tragrollenstuhl zur Anordnung in einer Förderbandanlage, und der Tragrollenstuhl weist einen Querträger auf, an dem drei Tragrollen aufgenommen sind, wobei der einstellbare Tragrollenstuhl einen oberen Tragrollenstuhl bildet, um das mit Fördergut beladene Förderband abzustützen und zu führen.

Werden Förderbänder mit einer Krümmung geführt, sodass die Förderbandanlage eine Kurve aufweist, so zieht die Längskraft im Förderband das Förderband über die Querträger und die Tragrollen zur Kurveninnenseite. Um zu vermeiden, dass durch den Betrieb der Förderbandanlage das Förderband über die kurveninneren Tragrollen von seiner Anordnung auf den Querträgern und den Tragrollen herausläuft, wird vorgesehen, die Innenseite der Tragrollenstühle anzuheben. Hierzu befindet sich bei jedem der Tragrollenstühle auf der Kurvenaußenseite eine Gelenkverbindung zwischen dem Tragrollenstuhl und der Förderbandanlage, und die Innenseite ist beweglich, sodass der Tragrollenstuhl mit dem Querträger und den Rollen über einen auf der Kurvenaußenseite vorhandenen Drehpunkt zwischen dem Querträger und der Förderbandanlage verkippt werden kann. Nachteilhafterweise reicht aber häufig das Verkippen des gesamten Querträgers mit einer starren Anordnung der Tragrollen zueinander nicht aus, um eine effiziente, und dennoch bandschonende Kurvenführung in der Förderbandanlage zu ermöglichen.

Gemäß der WO 2013/082642 A1, die eine Förderbandanlage nach dem Oberbegriff des Anspruchs 1 offenbart, ist ein weiterer Tragrollenstuhl einstellbar ausgebildet und kann in Anordnung an der Förderbandanlage verschiedene Positionen einnehmen. Der Tragrollenstuhl weist einen Rahmen auf, der starr an der Förderbandanlage angeordnet ist und der Querträger mit den Tragrollen ist auf dem Rahmen um eine Hochachse verdrehbar. Weiterhin kann die aus der Horizontalen nach oben geführte Neigung der äußeren Tragrollen über eine Spindel verändert werden. Die Anordnung des einstellbaren Tragrollenstuhls ist dabei relativ zur Förderbandanlage starr ausgeführt und der Tragrollenstuhl ist in sich verdrehbar. Eine Verkippung des Tragrollenstuhls mit einem durchgehenden Querträger relativ zur Horizontalen ermöglicht die gezeigte Anordnung nicht.

### OFFENBARUNG DER ERFINDUNG

Aufgabe der Erfindung ist die Bildung eines einstellbaren Tragrollenstuhls zur Anordnung in einer Förderbandanlage, die Schaffung einer einstellbaren Anordnung eines Tragrollenstuhls in einer Förderbandanlage und die Bildung einer solchen Förderbandanlage, wobei der Tragrollenstuhl möglichst auf einfache Weise in zwei voneinander getrennten Achsen kippbar oder verdrehbar sein soll. Dabei soll die konstruktive Ausführung des Tragrollenstuhls und die einstellbare Anordnung des Tragrollenstuhls in der Förderbandanlage möglichst einfach ausgeführt sein.

Diese Aufgabe wird ausgehend von einer Förderbandanlage mit einem einstellbaren Tragrollenstuhl gemäß dem Oberbegriff des Anspruchs 1 mit den jeweils kennzeichnenden Merkmalen gelöst.

Die Erfindung schließt die technische Lehre ein, dass die Verbindungselemente einen Aufliegeabschnitt aufweisen, mit dem diese auf dem Längsträger der Förderbandanlage aufliegen können, wobei der Aufliegeabschnitt Langlöcher aufweist, durch die Bolzen in verschiedenen Positionen hindurchführbar sind, und dass die Verbindungselemente damit zur positionsveränderlichen Anordnung auf dem Längsträger der Förderbandanlage ausgebildet sind, sodass der Querträger um eine Hochachse der Förderbandanlage verdreht in der Förderbandanlage anordbar ist, und wobei wenigstens eine der äußeren Tragrollen am Querträger kippbar aufgenommen ist, sodass eine Rotationsachse der äußeren Tragrollen zu einer Querachse des Querträgers einen Winkel einschließt.

Die Erfindung ermöglicht die gekippte und zugleich eine verdrehte Einstellung des Tragrollenstuhls in seiner Anordnung an der Förderbandanlage um zwei vorzugsweise senkrecht zueinander ausgebildete Richtungen, nämlich die Führungsrichtung, die der Bandlaufrichtung entspricht, und die Hochachse, die eine Vertikale der ansonsten horizontal verlaufenden Förderbandanlage bildet. Die Führungsrichtung entspricht dabei bei einer Krümmung, die die Förderbandanlage aufweisen kann, der Tangente im Anordnungspunkt des Tragrollenstuhls in der Förderbandanlage. Die Hochachse bezieht sich dabei auf die Vertikale auf die Führungsrichtung, und nur wenn die Förderbandanlage horizontal verläuft, entspricht die Hochachse auch der geodätischen Vertikalen. Die Verbindungselemente sind so an den gegenüberliegenden Seiten der Förderbandanlage angeordnet, dass, zumindest nähungsweise, eine Verbindungslinie zwischen den beiden Verbindungselementen auch den Kurvenmittelpunkt durchläuft, um den die Förderbandanlage mit einer Krümmung zur Bildung einer Kurve herumgeführt ist.

Die lageveränderliche Aufnahme des Querträgers durch die Verbindungselemente erfolgt dabei derart, dass der Querträger um eine Schwenkachse gekippt werden kann, wobei die Schwenkachse nicht mit dem Verbindungspunkt zwischen dem Querträger und einer Seite der Förderbandanlage zusammenfällt und vorzugsweise befindet sich die Schwenkachse mittig zwischen der Anordnung der beiden Verbindungselemente. Wird die Verbindung zwischen dem Querträger und einem ersten Verbindungselement in einer ersten Richtung versetzt, so wird die Verbindung zwischen dem Querträger und dem gegenüberliegenden Verbindungselement auf gleiche Weise in der entgegengesetzten Richtung versetzt. Dadurch entsteht eine Kippung des Querträgers um die ortsunveränderliche Schwenkachse, die mit der Führungsrichtung des Förderbandes zusammenfällt.

Durch das Schwenken des Querträgers, das nicht um eine Seitenachse erfolgt, sondern um eine zentrale Schwenkachse, führt zu dem Vorteil, dass das Fördergut durch eine Verschwenkung des Tragrollenstuhls nicht angehoben oder abgesenkt wird und das Förderband wird lediglich um seine Führungsrichtung tordiert. Durch die Verdrehung des Querträgers um die Hochachse wird der Rollenstuhl in seiner Quererstreckung relativ zur Führungsrichtung des Förderbandes leicht verdreht, wodurch eine Reibkomponente zwischen den Tragrollen und dem Förderband entsteht, die das Förderband in Richtung zur Kurvenaußenseite zieht. Durch den Überlauf des Förderbandes über die Tragrollen summieren sich die Reibkraftkomponenten jeder einzelnen Tragrolle, sodass das Förderband zusätzlich zur Verkippung des Tragrollenstuhls um die Schwenkachse durch Reibkräfte zur Kurvenaußenseite gezogen wird, um einen mittigen Überlauf des Förderbandes über den Tragrollenstuhl auch in einem Kurvenverlauf der Förderbandanlage sicherzustellen.

Nach der Erfindung kann der Tragrollenstuhl mit den Verbindungselementen, durch die der Tragrollenstuhl in wenigstens zwei Freiheitsgraden im Raum lageveränderlich an der Förderbandanlage angeordnet werden kann, zur Führung des Obergurtes des Förderbandes oder zur Führung des Untergurtes des Förderbandes dienen.

Dabei sind am Querträger Verbindungsstreben angeordnet, die mit einem freien Ende an den Verbindungselementen in einer veränderlichen Position anordbar sind. Die Verbindungsstreben bilden dabei die Verbindung zwischen dem Querträger und den Verbindungselementen, wobei die Verbindungsstreben jede mögliche geometrische Ausgestaltung aufweisen und auch mehrteilig sein können und die Verbindungsstreben können auch als Halteelemente oder Ähnliches am Querträger ausgebildet sein. Insbesondere sind die Verbindungsstreben rand- oder außenseitig, beispielsweise unterhalb der äußeren Tragrollen, am Querträger angeordnet und die Verbindungsstreben erstrecken sich in jeweils entgegengesetzte Richtungen beispielsweise auf einer gemeinsamen Linie oder in einer gemeinsamen Ebene am Querträger. In die gemeinsame Linie oder die gemeinsame Ebene kann der Querträger ebenfalls fallen. Der Querträger kann eine Muldenform aufweisen, sodass die beiden äußeren Tragrollen gemeinsam mit der wenigstens einen mittigen Tragrolle ein U mit nach außen abgewinkelten Seitenschenkeln bildet.

Dabei weisen die Verbindungselemente mehrere zueinander beabstandete Löcher auf, wobei das freie Ende der Verbindungsstreben mit jedem der Löcher in diskreten voneinander beabstandeten Positionen durch einen Bolzen verbolzbar ist. Die Löcher in den Verbindungselementen können dabei so angeordnet sein, dass die freien Enden der Verbindungsstreben an den gegenüberliegenden Verbindungselementen immer in umgekehrter Richtung, jedoch gleich beabstandet zu einer Mittelposition mit den Verbindungselementen verbunden werden können, und nur bei einem Verbolzen in der Mittelebene weist der Querträger eine horizontale Erstreckung auf. Wird beispielsweise kurveninnenseitig das freie Ende der Verbindungsstrebe im dritten Loch oberhalb eines zentralen Loches in der Mittelebene verbolzt, so wird auf der Kurvenaußenseite das freie Ende der gegenüberliegenden Verbindungsstrebe im dritten Loch unterhalb des zentralen Loches verbolzt. Nur dann, wenn die freien Enden der Verbindungsstreben in den zentralen Löchern der Verbindungselemente verbolzt sind, weist der Tragrollenstuhl eine insgesamt horizontale Erstreckung auf. Die Anordnung des Verbindungselementes an der Förderbandanlage selbst verändert sich bei der Verkippung des Querträgers um die Schwenkachse dabei nicht.

Dabei sind die Verbindungselemente zur positionsveränderlichen Anordnung auf einem Längsträger der Förderbandanlage ausgebildet, wobei sich die Längsträger im Wesentlichen parallel zueinander und parallel zur Führungsrichtung des Förderbandes über die gesamte Länge der Förderbandanlage hinweg erstrecken. Zur Anordnung der Verbindungselemente auf dem Längsträger weisen diese einen Aufliegeabschnitt auf, mit dem die Verbindungselemente auf dem Längsträger aufliegen können, wobei der Aufliegeabschnitt Langlöcher aufweist, durch die Bolzen in verschiedenen Positionen hindurchführbar sind. Die Bolzen können dabei ortsfest am Längsträger angeordnet sein und durch die Langlöcher wird eine Verschiebung des Verbindungselementes in Längsrichtung des Längsträgers ermöglicht. Dabei sind die Langlöcher leicht bogenförmig um die Hochachse des Tragrollenstuhls ausgebildet, die sich mittig zwischen den beiden Verbindungselementen insbesondere in der Vertikalen erstreckt. Durch die veränderliche Anordnung der Bolzen in den Langlöchern wird eine Verdrehung des Tragrollenstuhls bei ansonsten starren Verbindungen zwischen den Verbindungselementen und dem Querträger über die freien Enden der Verbindungsstreben ermöglicht. Durch die so geschaffene positionsveränderliche Anordnung der Verbindungselemente am Längsträger der Förderbandanlage wird ein Schräglauf des Förderbandes über den um die Hochachse verdrehten Tragrollenstuhl geschaffen, wodurch die Reibkomponente gebildet wird, die das Förderband zur Kurvenaußenseite zieht.

Dabei ist die Schwenkachse des Querträgers, die in Führungsrichtung des Förderbandes verläuft, mittig zwischen den Verbindungselementen ausgebildet, wobei die Löcher in den Verbindungselementen mit einem gleichen Abstand zur Schwenkachse um diese herum angeordnet sind. Daraus ergibt sich eine leicht bogenförmige Anordnung der Löcher in den Verbindungselementen, über die die freien Enden der Verbindungsstreben am Querträger verbolzt werden können.

Am Querträger sind erfindungsgemäß innere und äußere Tragrollen aufgenommen und gemäß der Erfindung kann wenigstens eine der äußeren Tragrollen am Querträger kippbar aufgenommen sein, sodass eine Rotationsachse der äußeren Tragrollen zur Quererstreckung des Querträgers einen Winkel einschließt. Dadurch wird die Bildung einer Reibkomponente zwischen den insbesondere äußeren Tragrollen und dem Förderband weiter verstärkt, sodass die zusätzliche angewinkelte Anordnung der äußeren Tragrollen relativ zur Querachse des Querträgers bei besonders kleinen Kurvenradien in der Förderbandanlage vorteilhaft anwendbar ist.

Ferner ist eine einstellbare Anordnung eines Tragrollenstuhls in einer Förderbandanlage betroffen, wobei der Tragrollenstuhl einen Querträger aufweist, an dem innere und äußere Tragrollen aufgenommen sind, die zur Abstützung und zur Führung eines in einer Führungsrichtung überlaufenden Förderbandes ausgebildet sind, wobei zwei Verbindungselemente vorgesehen sind, durch die der Tragrollenstuhl an sich gegenüberliegenden Seiten in der Förderbandanlage angeordnet ist. Erfindungsgemäß ist vorgesehen, dass die Verbindungselemente einen Aufliegeabschnitt aufweisen, mit dem diese auf einem Längsträger der Förderbandanlage aufliegen können, wobei der Aufliegeabschnitt Langlöcher aufweist, durch die Bolzen in verschiedenen Positionen hindurchführbar sind, sodass der Tragrollenstuhl durch Anordnung der Verbindungselemente auf dem Längsträger der Förderbandanlage in verschiedenen Positionen um eine Hochachse der Förderbandanlage verdreht in der Förderbandanlage anordbar ist und wobei wenigstens eine der äußeren Tragrollen am Querträger kippbar aufgenommen ist, sodass eine Rotationsachse der äußeren Tragrollen zu einer Querachse des Querträgers einen Winkel einschließt. Die in Zusammenhang mit dem einstellbaren Tragrollenstuhl aufgeführten weiteren Merkmale und zugehörigen Vorteile finden für die einstellbare Anordnung des Tragrollenstuhls in der Förderbandanlage auf gleiche Weise Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: einen Querschnitt der Förderbandanlage mit einem oberen Tragrollenstuhl für den Obergurt des Förderbandes und mit einem unteren Tragrollenstuhl für den Untergurt des Förderbandes,
- Figur 2: eine Seitenansicht der Förderbandanlage gemäß Figur 1,
- Figur 3: die Darstellung sich gegenüberliegender Verbindungselemente, die Verbindungsstreben mit den freien Enden in verschiedenen Lochpositionen aufnehmen,
- Figur 4: eine Seitenansicht des Tragrollenstuhls mit einem Verbindungselement, das auf einem Längsträger aufliegt,
- Figur 5: eine Draufsicht auf mehrere Tragrollenstühle in Anordnung an zwei parallel verlaufenden Längsträgern der Förderbandanlage, und
- Figur 6: eine Draufsicht auf einstellbare Tragrollenstühle in Anordnung an zwei Längsträger der Förderbandanlage, wobei ein erster Tragrollenstuhl nicht verdreht ist und ein weiterer Tragrollenstuhl ist um die Hochachse der Förderbandanlage verdreht.

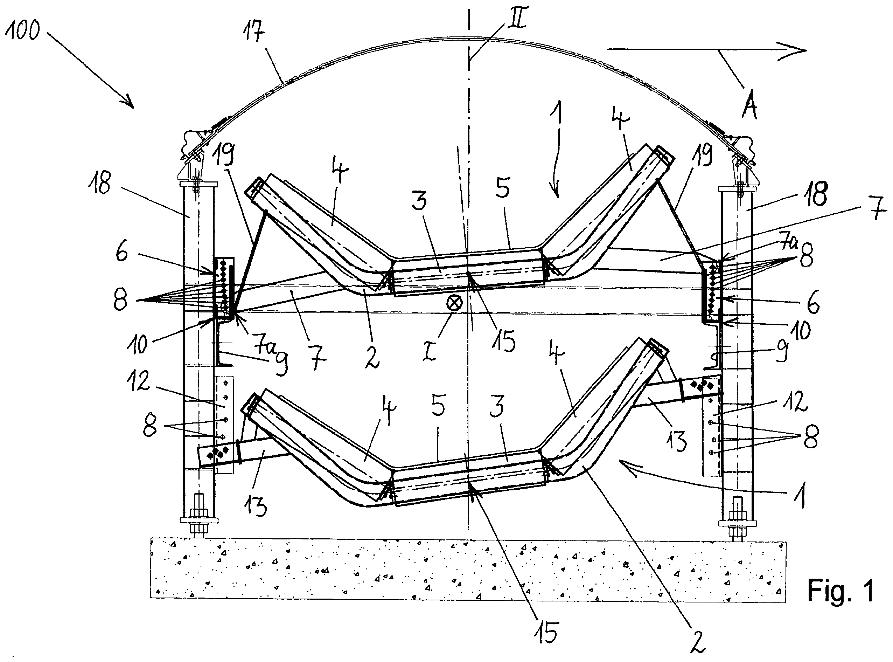

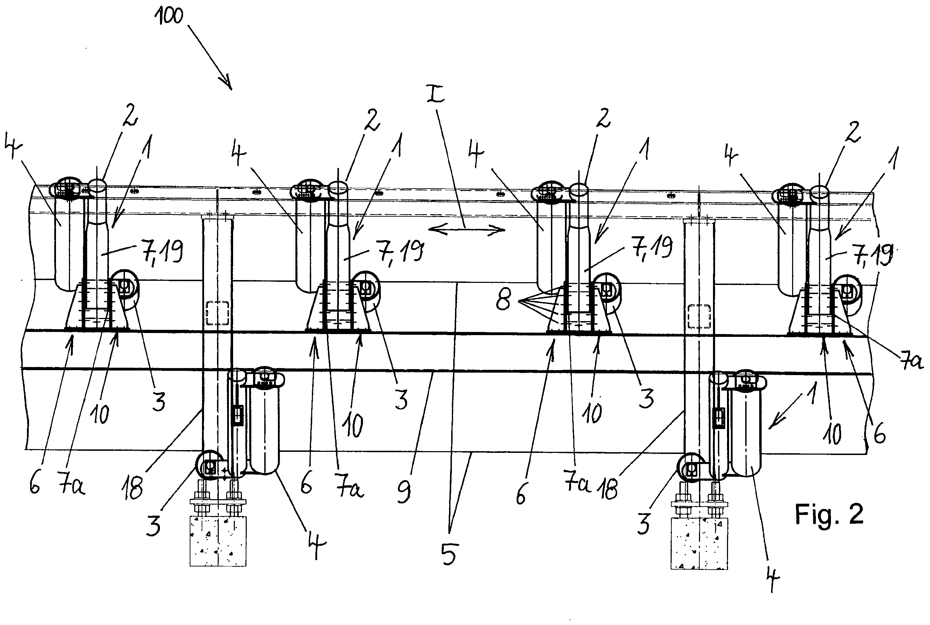

Die Figuren 1 und 2 zeigen eine Förderbandanlage 100, und Figur 1 stellt die Förderbandanlage 100 in einem Querschnitt dar, sodass eine Führungsrichtung I zur Führung des Förderbandes 5 senkrecht auf der dargestellten Schnittebene steht und Figur 2 zeigt die Förderbandanlage 100 in einer Seitenansicht, sodass die Führungsrichtung I des Förderbandes horizontal quer verläuft.

Die Förderbandanlage 100 dient zur Beförderung von Fördergut, das auf dem Förderband 5 abgelegt werden kann, und das Fördergut wird auf dem Obergurt des Förderbandes 5 befördert, der über obere einstellbare Tragrollenstühle 1 geführt wird. Der Untergurt des Förderbandes 5 verläuft unterhalb des Obergurtes, und es sind unterseitig ebenfalls einstellbare Tragrollenstühle 1 gezeigt, die das Förderband 5 ohne aufgebrachtes Fördergut führen, wobei die Laufrichtung des Förderbandes 5 auf den unteren Tragrollenstühlen 1 in entgegengesetzter Richtung zur Laufrichtung des Förderbandes 5 auf den oberen Tragrollenstühlen 1 ausgebildet ist. Aufgrund der Masse, die sich durch das Fördergut auf dem oberen Förderband ergibt, sind die Abstände zwischen den Tragrollenstühlen 1 zur Führung des Obergurtes mit geringeren Abständen in der Förderbandanlage 100 angeordnet, als die unteren Tragrollenstühle 1 zur Führung des Untergurtes.

Der Rahmen der Förderbandanlage 100 weist mehrere Stützen 18 auf, die etwa senkrecht verlaufen, und es sind Längsträger 9 vorgesehen, die parallel zur Führungsrichtung I des Förderbandes 5 horizontal verlaufen. Dabei sind die Längsträger 9 im oberen Drittel der Länge der Stützen 18 angeordnet, und die oberen Tragrollenstühle 1 sind über Verbindungselemente 6 auf den Längsträgern 9 abgestützt. Die unteren Tragrollenstühle 1 sind über Verbindungselemente 12 an den Stützen 18 aufgenommen, und die Verbindungselemente 12 verlaufen etwa senkrecht und sind seitlich an den Stützen 18 angebunden.

Die einstellbaren Tragrollenstühle 1 weisen als Grundkörper einen Querträger 2 auf, der sich in unverstellter Anordnung etwa quer zur Führungsrichtung I des Förderbandes 5 erstreckt. Am Querträger 2 sind mehrere Tragrollen 3 und 4 angeordnet, die in einer jeweiligen Rotationsachse drehbar sind, und die Tragrollen 3 und 4 sind zueinander angewinkelt angeordnet, wobei die Winkelanordnung durch den abgewinkelten Verlauf des Querträgers 2 erreicht wird. Durch die angewinkelte Anordnung der äußeren Tragrollen 4 in Bezug auf die mittige Tragrolle 3 entsteht eine Fördermulde im Förderband 5, das über die Tragrollen 3 und 4 abläuft. Über den Tragrollenstühlen 1 ist eine Haube 17 angeordnet, die seitlich an den Stützen 18 aufliegt.

Die Förderbandanlage 100 auf nicht gezeigte Weise mit einer Krümmung, sodass sich eine Kurve in der Förderbandanlage 100 ergibt und die Richtung zur Kurveninnenseite ist mit A gekennzeichnet. Um zu vermeiden, dass das Förderband 5 aufgrund seiner Längsspannung in Richtung zur Kurveninnenseite A von den Tragrollen 3 und 4 des Querträgers 2 heruntergezogen wird, wird der Querträger 2 innenseitig angehoben, wodurch sich Gegenhaltekräfte ergeben, die das Herunterlaufen des Förderbandes 5 von den Tragrollen 3 und 4 verhindern. Um die oberen und unteren Tragrollenstühle 1 um eine jeweilige Schwenkachse 15 zu verkippen, sind die Verbindungselemente 6, 12 auf erfindungsgemäße Weise ausgeführt, wie nachfolgend näher beschrieben.

Die oberen Tragrollenstühle 1 sind über die Verbindungselemente 6 mit dem Rahmen der Förderbandanlage 100 verbunden, und die Verbindungselemente 6 weisen Aufliegeabschnitte 10 auf, mit denen diese auf den Längsträgern 9 aufliegen. Die Tragrollenstühle 1 weisen Verbindungsstreben 7 und Laststützen 19 auf, die am Querträger 2 angeordnet sind, und die Verbindungsstreben 7 weisen in Richtung zu den Verbindungselementen 6. Die Laststützen 19 erstrecken sich zwischen den Querträgern 2 und den freien Enden 7a der Verbindungsstreben 7, um die Verbindungsstreben 7 zu stabilisieren.

Die Verbindungselemente 6 weisen mehrere Löcher 8 auf, und die Löcher 8 sind so um die Schwenkachse 15 angeordnet, dass die beiden sich gegenüberliegenden freien Enden 7a der Verbindungsstreben 7 in den Löchern 8 verbolzt werden können. Dabei erfolgt die Verbindung zwischen den freien Enden 7a der Verbindungsstreben 7 auf den beiden Seiten der Förderbandanlage 100 in entgegengesetzter vertikaler Richtung. Gezeigt ist in Figur 1 in Verbindung mit dem oberen Tragrollenstuhl 1 eine Verbindung des freien Endes 7a auf der linken Seite in einem unteren Loch 8, und auf der rechten Seite in einem oberen Loch 8 des Verbindungselementes 6. Dadurch entsteht eine Verkippung des Tragrollenstuhls 1 um eine ansonsten ortsfeste Schwenkachse 15, sodass der Vorteil entsteht, dass nicht der gesamte Tragrollenstuhl 1 angehoben werden muss und die effektive Laufhöhe des Förderbandes 5 bleibt unverändert und dieses wird nur tordiert. Um das passgenaue Verbolzen der freien Enden 7a der Verbindungsstreben 7 zu erreichen, ist erkennbar, dass die Löcher 8 bogenförmig um die Schwenkachse 15 angeordnet sind. Werden die sich gegenüberliegenden freien Enden 7a auf mittlere Löcher 8 angeordnet, so würde der Querträger 2, beispielsweise außerhalb eines Kurvenverlaufes der Förderbandanlage 100, horizontal verlaufen.

Der untere Tragrollenstuhl 1 zur Führung des Untergurtes des Förderbandes 5 weist Verbindungsstreben 13 auf, die endseitig mit einem als Verbindungsplatte ausgeführten Verbindungselement 12 verbunden werden. Dabei weist das Verbindungselement 12 ebenfalls Löcher 8 auf, in denen das Ende der Verbindungsstreben 13 auf gleiche Weise wie in Zusammenhang mit dem oberen Tragrollenstuhl 1 beschrieben, ebenfalls verbolzt werden können. Folglich kann auch der untere Tragrollenstuhl 1 um eine ansonsten raumfeste Schwenkachse 15 verkippt werden.

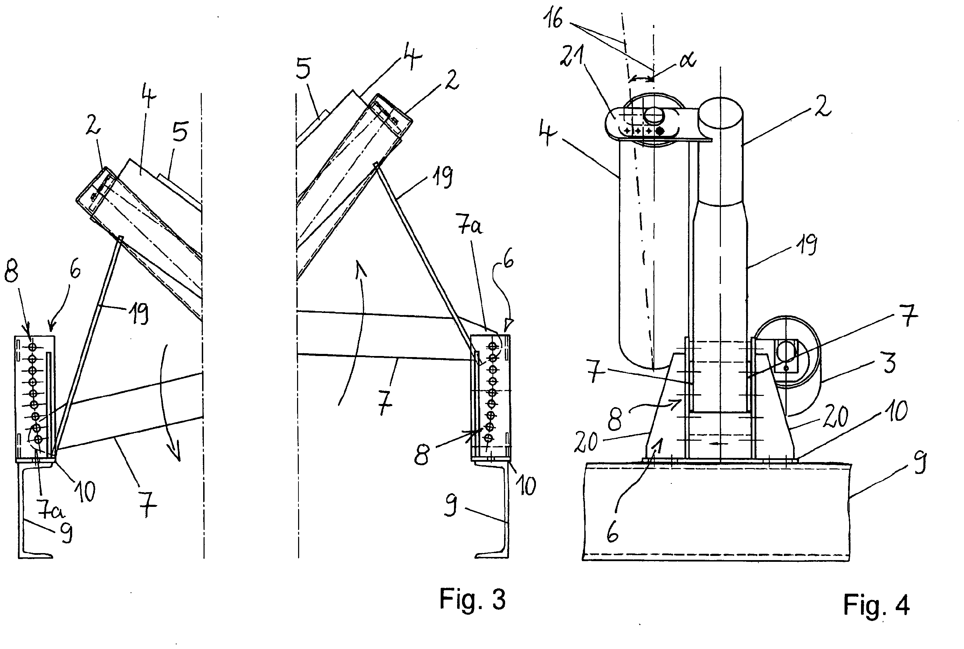

Figur 3 zeigt die Anordnung der Verbindungselemente 6, wie diese zur Verbindung der oberen Tragrollenstühle 1 mit dem Rahmen der Förderbandanlage 100 vorgesehen sind. Auf der linken Seite ist dabei das freie Ende 7a der Verbindungsstrebe 7 in einem unteren Loch 8 am Verbindungselement 6 verbolzt und auf der rechten Seite ist das freie Ende 7a der Verbindungsstrebe 7 in einem oberen Loch 8 des Verbindungselementes 6 verbolzt. Dabei muss die Anzahl der übersprungenen Löcher 8 von der Mittelebene, die eine horizontale Anordnung des Tragrollenstuhls 1 bewirken würde, auf der linken und auf der rechten Seite gleich sein.

Auf der unteren Seite weisen die Verbindungselemente 6 jeweils einen Aufliegeabschnitt 10 auf, mit dem die Verbindungselemente 6 auf den Längsträgern 9 der Förderbandanlage 100 aufliegen, die den tragenden Bestandteil des Rahmens der Förderbandanlage 100 bilden.

Weiterhin gezeigt ist die unterstützende Verbindung des freien Endes 7a der Verbindungsstreben 7 mit dem Querträger 2 durch eine Laststütze 19, sodass durch die Laststütze 19 die Verbindungsstrebe 7 stabilisiert wird. Angeordnet an den seitlichen, geneigten Enden des Querträgers 2 sind die Tragrollen 4, auf denen das Förderband 5 geführt ist.

Figur 4 zeigt eine Seitenansicht des Tragrollenstuhls 1 mit dem Querträger 2, der Tragrolle 3 auf der unteren Seite und der Tragrolle 4 auf der quer verlaufenden Außenseite, und vorderseitig ist die Laststütze 19 gezeigt, die als flaches Blechelement ausgeführt ist. Die Verbindungsstrebe 7 ist gabelförmig ausgeführt und weist eine linke und eine rechte Seite auf, die seitlich an dem unteren Ende der Laststütze 19 angebunden sind, und im Verbindungsbereich mit der Laststütze 19 bilden die Verbindungsstreben 7 das freie Ende 7a, um mit den Löchern 8 im Verbindungselement 6 verbolzt zu werden. Das Verbindungselement 6 weist seitlich angeordnet Stabilisierungselemente 20 auf, die sich senkrecht zum Aufliegeabschnitt 10 erstrecken, mit dem das Verbindungselement 6 auf der Oberseite des Längsträgers 9 aufliegt.

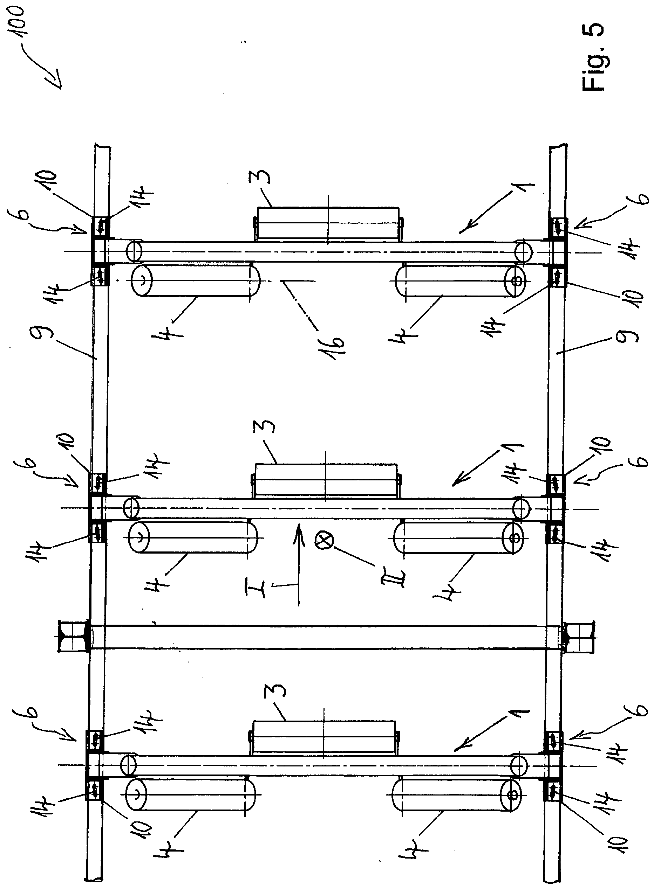

Figur 5 zeigt eine Draufsicht auf mehrere Tragrollenstühle 1 zwischen zwei Längsträgern 9, und die Tragrollenstühle 1 mit den Querträgern 2, den Tragrollen 3 und 4 sind mit den Verbindungselementen 6 in einer unter einem rechten Winkel quer verlaufenden Erstreckung an den längs verlaufenden Längsträgern 9 angebunden. Damit weisen die Tragrollenstühle 1 keine Verdrehung um die Hochachse II auf, die senkrecht auf der dargestellten Führungsrichtung 1 steht.

Aufgrund der geraden Anordnung der Tragrollen 3 und 4 verlaufen diese in einer jeweiligen Rotationsachse 16, beispielhaft gezeigt an einer Tragrolle 4, die jeweils ebenfalls senkrecht zum Längsverlauf der Längsträger 9 in Führungsrichtung 1 verlaufen.

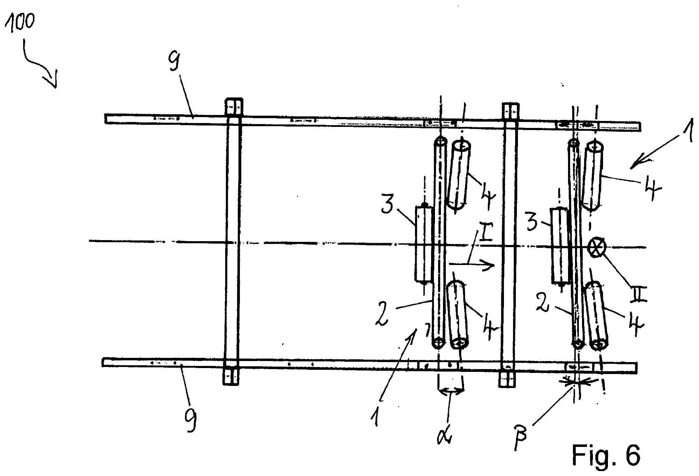

Die Verbindungselemente 6 weisen in ihren Aufliegeabschnitten 10 Langlöcher 14 auf, und die Langlöcher 14 erstrecken sich etwa bogenförmig um die jeweilige Mitte der Tragrollenstühle 1. Die Verbindungselemente 6 sind durch die Langlöcher 14 mit den Längsträgern 9 verbolzt, und um die Tragrollenstühle 1 erfindungsgemäß zur Führungsrichtung I leicht zu verdrehen, können die Bolzen, die durch die Langlöcher 14 geführt sind, leicht gelöst werden, und die Tragrollenstühle 1 können verdreht werden, indem die Bolzen in den Langlöchern 14 unterschiedliche Positionen einnehmen. Einen verdrehten Rollenstuhl 1 zeigt Figur 6.

Figur 6 zeigt die Draufsicht auf die Förderbandanlage 100, und es sind zwei Tragrollenstühle 1 gezeigt, wobei der linke Tragrollenstuhl 1 unverdreht und der rechte Tragrollenstuhl 1 um die Hochachse II um den Winkel β verdreht an den Querträger 9 angeordnet ist. Damit erstreckt sich der Querträger 2 unter dem Winkel β zur senkrechten Querrichtung der Führungsrichtung I, und die Verdrehung erfolgt auf der Weise, dass das über den quer verdrehten Tragrollenstuhl 1 laufende Förderband 5 zur Außenrichtung einer Krümmung in einem Kurvenverlauf der Förderbandanlage 100 gezogen wird.

Weiterhin gezeigt sind die äußeren Tragrollen 4 mit einem Winkel α relativ zur Erstreckung des Querträgers 2, und die Verstellung der Tragrollen 4 um den Winkel α erzeugt ebenfalls eine Reibkomponente im Kontakt mit dem Förderband 5 der Tragrollen 4, die ein kurveninnenseitiges Abziehen des Förderbandes 5 von den Tragrollen 3 und 4 verhindert. Die Verstellung der Tragrolle 4 ist in Zusammenhang mit Figur 4 dargestellt.

Die Anordnung der äußeren Seite der Tragrolle 4 erfolgt am äußeren Ende des Querträgers 1 über eine Haltelasche 21, die das äußere Ende der Tragrolle 4 in verschiedenen Positionen aufnehmen kann, sodass der Winkel α zwischen der Längserstreckung des Querträgers 2 und der Rotationsachse 16 der Tragrolle 4 eingestellt werden kann, wie mit einer weiteren Rotationsachse 16 in einer verstellten Anordnung angedeutet.

Um eine Verdrehung auch der unteren Tragrollenstühle 1 um die Hochachse II zu erziehen, und um die Verbindungselemente 12 zur Anbindung der unteren Tragrollenstühle 1 an den Rahmen der Förderbandanlage 1 auszuführen, können die Verbindungselemente 12, wie in Zusammenhang mit Figur 1 ersichtlich, als Plattenelemente ausgeführt sein und die unteren Verbindungselemente 12 sind nicht an den Längsträgern 9 angebunden, sondern seitlich und mit einer vertikalen Erstreckung an die Stützen 18. Um nun eine Verdrehung der unteren Tragrollenstühle 1 um die Hochachse II zu erziehen, können zwischen die plattenartigen Verbindungselemente 12 und den Stützen 18 Unterlegelemente vorgesehen sein. Werden an den sich gegenüberliegenden Seiten der Förderbandanlage 1, also kurveninnenseitig und kurvenaußenseitig, unterschiedlich dicke Unterlegelemente verwendet, so kann erfindungsgemäß auf einfache Weise auch eine Verdrehung der unteren Tragrollenstühle 1 um die Hochachse II erzeugt werden. Insbesondere können verschieden dick bemaßte Verbindungselemente 12 bereitgestellt werden, die folglich die Querträger 2 der Tragrollenstühle 1 unter einem Winkel zur Führungsrichtung I an den Stützen 18 anbinden können.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführung Gebrauch macht.

### Bezugszeichenliste

- 100: Förderbandanlage

- 1: einstellbarer Tragrollenstuhl
- 2: Querträger
- 3: Tragrolle
- 4: Tragrolle
- 5: Förderband
- 6: Verbindungselement
- 7: Verbindungsstrebe
- 7a: freies Ende
- 8: Loch
- 9: Längsträger
- 10: Aufliegeabschnitt
- 12: Verbindungselement
- 13: Verbindungsstrebe
- 14: Langloch
- 15: Schwenkachse
- 16: Rotationachse
- 17: Haube
- 18: Stütze
- 19: Laststütze
- 20: Stabilisierungselement
- 21: Haltelasche

- I: Führungsrichtung
- II: Hochachse
- A: Kurveninnenseite
- α: Winkel
- β: Winkel

## Patentansprüche

1. Förderbandanlage (100) mit einem einstellbaren Tragrollenstuhl (1), wobei der Tragrollenstuhl (1) einen Querträger (2) aufweist, an dem innere Tragrollen (3) und äußere Tragrollen (4) aufgenommen sind, die zur Abstützung und Führung eines in einer Führungsrichtung (I) überlaufenden Förderbandes (5) ausgebildet sind, weiterhin aufweisend zwei Verbindungselemente (6, 12), durch die der Tragrollenstuhl (1) an sich gegenüberliegenden Seiten in der Förderbandanlage (100) angeordnet ist, und wobei die Verbindungselemente (6, 12) zur lageveränderlichen Aufnahme des Querträgers (2) ausgebildet sind, wobei die Verbindungselemente (6) einen Aufliegeabschnitt (10) aufweisen, mit dem diese auf einem jeweiligen Längsträger (9) der Förderbandanlage (100) aufliegen, wobei der Aufliegeabschnitt (10) Langlöcher (14) aufweist, durch die Bolzen in verschiedenen Positionen hindurchführbar sind, und die Verbindungselemente (6, 12) damit zur positionsveränderlichen Anordnung auf dem Längsträger (9) der Förderbandanlage (100) ausgebildet sind, wobei wenigstens eine der äußeren Tragrollen (4) am Querträger (2) relativ zur Erstreckung des Querträgers (2) in Führungsrichtung (I) kippbar aufgenommen ist, sodass eine Rotationsachse (16) der äußeren Tragrollen (4) zu einer Querachse des Querträgers (2) einen Winkel (α) einschließt, wobei am Querträger (2) Verbindungsstreben (7, 13) angeordnet sind, die mit einem freien Ende (7a) an den Verbindungselementen (6, 12) in einer veränderlichen Position anordbar sind, und wobei die Verbindungselemente (6, 12) mehrere zueinander beabstandete Löcher (8) aufweisen, wobei das freie Ende (7a) der Verbindungsstreben (7, 13) mit jedem der Löcher (8) in diskreten voneinander beabstandeten Positionen durch einen Bolzen verbolzbar ist,
**dadurch gekennzeichnet, dass** die Langlöcher (14) sich etwa bogenförmig um die jeweilige Mitte des Tragrollenstuhls (1) erstrecken, sodass der Querträger (2) und somit der Tragrollenstuhl (1) in verschiedenen Positionen um eine Hochachse (II) der Förderbandanlage (100) verdreht in der Förderbandanlage (100) anordbar ist, und
dass die Löcher (8) in den Verbindungselementen (6, 12) mit einem gleichen Abstand zu einer sich in Führungsrichtung (I) erstreckenden und mittig zwischen den Verbindungselementen (6, 12) ausgebildeten Schwenkachse (15) um diese herum angeordnet sind, sodass der Querträger (2) und somit der Tragrollenstuhl (1) in in verschiedenen Positionen gekippten Lagen um die Schwenkachse (15) in der Förderbandanlage (100) anordbar ist.

## Claims

1. Conveyor-belt system (100) with an adjustable carrying-roller bracket (1), the carrying-roller bracket (1) having a crossmember (2), on which are accommodated inner carrying rollers (3) and outer carrying rollers (4), which are designed for supporting and guiding a conveyor belt (5) which runs over the same in a guidance direction (I), and also having two connecting element (6, 12), by way of which the carrying-roller bracket (1) is arranged in the conveyor-belt system (100) on opposite sides, and wherein the connecting elements (6, 12) are designed for accommodating the crossmember (2) with variable positioning, wherein the connecting elements (6) have a bearing portion (10), by means of which they bear on a respected longitudinal member (9) of the conveyor-belt system (100), wherein the bearing portion (10) has slots (14), through which bolts can be guided in various positions, and the connecting elements (6, 12) are thus designed for arranging on the longitudinal member (9) of the conveyor-belt system (100) with variable positioning, wherein at least one of the outer carrying rollers (4) is accommodated on the crossmember (2) such that it can tilted in the guidance direction (I) relative to the extent of the crossmember (2), this resulting in an axis of rotation (16) of the outer carrying rollers (4) enclosing an angle (α) in relation to a transverse axis of the crossmember (2), wherein the crossmember (2) has arranged on it connecting struts (7, 13) which can be arranged on the connecting elements (6, 12) in a variable position by way of a free end (7a), and wherein the connecting elements (6, 12) have a plurality of spaced-apart holes (8), wherein the free end (7a) of the connecting struts (7, 13) can be bolted to each of the holes (8), in discrete, spaced-apart positions, by a bolt,
**characterized in that** the slots (14) extend approximately in arcuate form around the respective centre of the carrying-roller bracket (1), and therefore the crossmember (2) and thus the carrying-roller bracket (1) can be arranged in the conveyor-belt system (100) in various positions in a state in which they are rotated about a vertical axis (II) of the conveyor-belt system (100), and
**in that** the holes (8) in the connecting elements (6, 12) are arranged around a pivot axis (15), which extends in the guidance direction (I) and is formed centrally between the connecting elements (6, 12), at an equal distance therefrom, and therefore the crossmember (2) and thus the carrying-roller bracket (1) can be arranged in the conveyor-belt system (100) in positions in which they are tilted differently about the pivot axis (15).

## Revendications

1. Système de bande transporteuse (100) comprenant un siège de rouleaux porteurs ajustable (1), le siège de rouleaux porteurs (1) présentant une traverse (2) au niveau de laquelle sont reçus des rouleaux porteurs intérieurs (3) et des rouleaux porteurs extérieurs (4), lesquels sont réalisés pour supporter et guider une bande transporteuse (5) s'étendant sur ceux-ci dans une direction de guidage (I), et présentant en outre deux éléments de liaison (6, 12) par lesquels le siège de rouleaux porteurs (1) est disposé sur des côtés opposés dans le système de bande transporteuse (100), et les éléments de liaison (6, 12) étant réalisés pour recevoir la traverse (2) en position variable, les éléments de liaison (6) présentant une portion d'appui (10) avec laquelle ils s'appuient sur un longeron respectif (9) du système de bande transporteuse (100), la portion d'appui (10) présentant des trous oblongs (14) à travers lesquels peuvent être guidés des boulons dans différentes positions, et les éléments de liaison (6, 12) étant ainsi réalisés pour être agencés en position variable sur le longeron (9) du système de bande transporteuse (100), au moins l'un des rouleaux porteurs extérieurs (4) étant reçu au niveau de la traverse (2) de manière à pouvoir basculer par rapport à l'étendue de la traverse (2) dans la direction de guidage (I), de telle sorte qu'un axe de rotation (16) des rouleaux porteurs extérieurs (4) forme avec un axe transversal de la traverse (2) un angle (α), des entretoises de liaison (7, 13) étant disposées au niveau de la traverse (2), lesquelles peuvent être disposées avec une extrémité libre (7a) au niveau des éléments de liaison (6, 12) dans une position variable, et les éléments de liaison (6, 12) présentant plusieurs trous (8) espacés les uns des autres, l'extrémité libre (7a) des entretoises de liaison (7, 13) pouvant être boulonnée par un boulon avec chacun des trous (8) dans des positions distinctes espacées les unes des autres, **caractérisé en ce que** les trous oblongs (14) s'étendent approximativement sous forme courbe autour du centre respectif du siège de rouleaux porteurs (1), de telle sorte que la traverse (2), et par conséquent le siège de rouleaux porteurs (1), puissent être disposés dans le système de bande transporteuse (100) de manière tournée dans différentes positions autour d'un axe vertical (II) du système de bande transporteuse (100), et **en ce que** les trous (8) sont disposés dans les éléments de liaison (6, 12) autour d'un axe de pivotement (15) s'étendant dans la direction de guidage (I) et réalisé centralement entre les éléments de liaison (6, 12) et à une distance identique de celui-ci, de telle sorte que la traverse (2) et par conséquent le siège de rouleaux porteurs (1) puissent être disposés dans des positions basculées dans différentes positions autour de l'axe de pivotement (15) dans le système de bande transporteuse (100).
